# EUROPEAN PATENT SPECIFICATION

(11) **EP 2 354 081 B1**
(45) Date of publication and mention of the grant of the patent: **26.03.2014**
(21) Application number: 11152053.2
(22) Date of filing: 25.01.2011
(51) Int. Cl.: B67C 3/26, B67C 3/28

(54) **A device for dispensing a product in a filling machine**
Vorrichtung zur Abgabe eines flüssigen Produkts in einer Füllmaschine
Dispositif de distribution de produit fluide dans une machine de remplissage

(30) Priority: 05.02.2010 IT BO20100064
(43) Date of publication of application: 10.08.2011
(73) Proprietor: AZIONARIA COSTRUZIONI MACCHINE AUTOMATICHE-A.C.M.A.-S.p.A., 40131 Bologna (IT)
(72) Inventor: Zanini, Gianpietro, 46010, MONTANARA DI CURTATONE (Mantova) (IT); Pedercini, Dino, 46040, CERESARA (Mantova) (IT)
(74) Representative: Bianciardi, Ezio

(56) References cited:
- EP-A1- 1 731 478
- EP-A1- 1 762 539
- US-A- 4 787 427

## Description

The present invention relates to a device for dispensing a product in a filling machine, according to the preamble of claim 1 and as known from EP 1 731 478, and to a filling device comprising such a dispensing device.

The present invention has application in a system for filling a succession of containers with liquid and semi-liquid products, typically food products such as milk, oil, honey and fruit juices, or non-food items such as detergents and others besides.

Conventional filling machines comprise a rotating carousel with a plurality of filling stations, each accommodating a respective container to be filled with the liquid product.

Each filling station is equipped with a corresponding device from which to dispense the product, each device in turn comprising a nozzle, and internally of the nozzle, a movable valve element by which an outlet allowing the passage of the product can be opened and closed in alternation.

The valve element comprises a stem connected to an ogival element positioned at the dispensing outlet.

Internally, the dispenser presents a chamber of variable volume connected to a source of pressurized air.

In particular, the chamber of variable volume is delimited in part by a diaphragm deformable elastically under the force of the pressurized air.

The end of the stem remote from the ogival element is secured to the diaphragm, so that when the chamber is connected to the source of pressurized air, the diaphragm will deform elastically, retracting the stem and the ogival element into the nozzle. In this situation, the outlet is freed and the dispenser nozzle opened.

To close the dispensing nozzle, the pressurized air is exhausted from the chamber, whereupon the diaphragm and the valve stem are able to return to the former position.

More exactly, air is evacuated from the chamber of variable volume through an exhaust duct, along which a restriction is installed; the restriction is adjustable through the agency of screw means.

Thus, the time taken to evacuate the chamber can be regulated, as also consequently can the time taken by the dispenser to close.

In effect, the evacuation time, and therefore the speed at which the dispenser closes, must be controlled according to the viscosity of the product being dispensed.

More precisely, in the event of the product having a high viscosity, the closing time must be short, so that the flow of the product is shut off instantaneously to all intents and purposes. One example of a highly viscous product is honey.

Conversely, in cases where the product is notably fluid and characteristically foamable, the closing time needs to be relatively long, so as to limit the formation of foam as far as possible.

In this case it is also preferable to maximize the time taken by the dispenser to open, as this will avoid creating turbulences that can generate foam.

In short, the time taken by the dispensers to open and close is controlled according to the product being handled.

As already indicated, the timing is controlled by adjusting the restriction on the aforementioned exhaust duct.

The adjustment is effected manually, by way of screw means positioned to coincide with the restriction, and arrived at by trial and error, with the end in view of identifying the most suitable setting for the product being batched.

It will be appreciated also that the timing of the dispensers must also be controlled on the basis of other parameters such as, for example, the fluid level in the tank containing the product, or the pressure acting on the product both inside the tank and within other parts of a feed system to which the tank is connected.

Self-evidently, in the light of the foregoing, this trial-and-error method of control does not guarantee a sufficiently high level of precision and is also extremely laborious, given that the operations outlined above must be carried out for each dispenser associated with each of the single filling devices installed on the carousel of the filling machine.

Accordingly, the object of the present invention is to provide a device for dispensing a product in a filling machine, and a filling device comprising such a dispensing device, in which the drawbacks associated with the prior art as described above are overcome.

One object of the invention, in particular, is to provide a device for dispensing a product in a filling machine, and a filling device comprising such a dispensing device, such as can be adapted with precision to different types of product handled by the filling machine.

The stated objects of the present invention are substantially realized in a device for dispensing a product in a filling machine, and a filling device comprising such a dispensing device, of which the essential features are as recited in one or more of the appended claims.

The invention will now be described in detail, by way of example, with the aid of the accompanying drawings, in which:

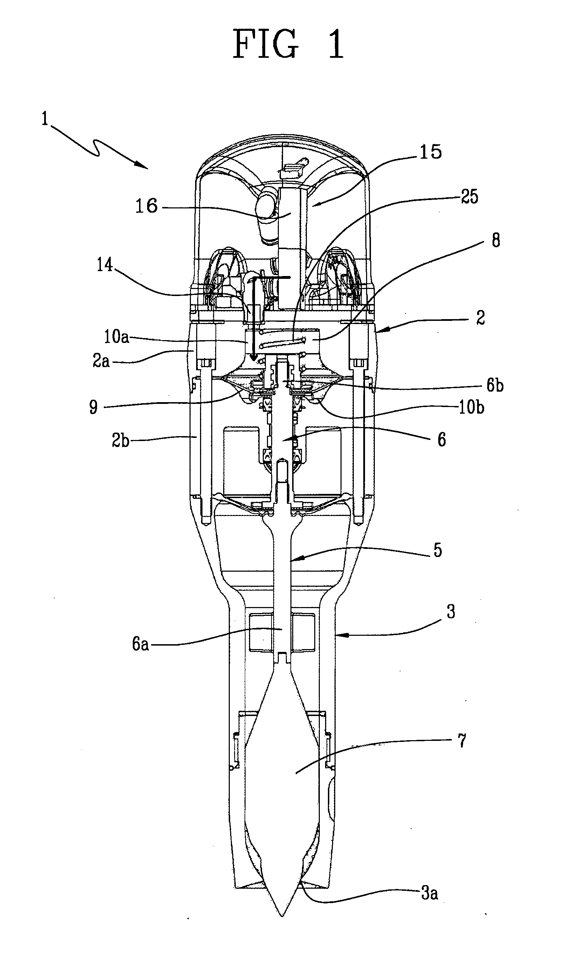

- figure 1 shows a first longitudinal section view of a device for dispensing a product in a filling machine, according to the present invention;

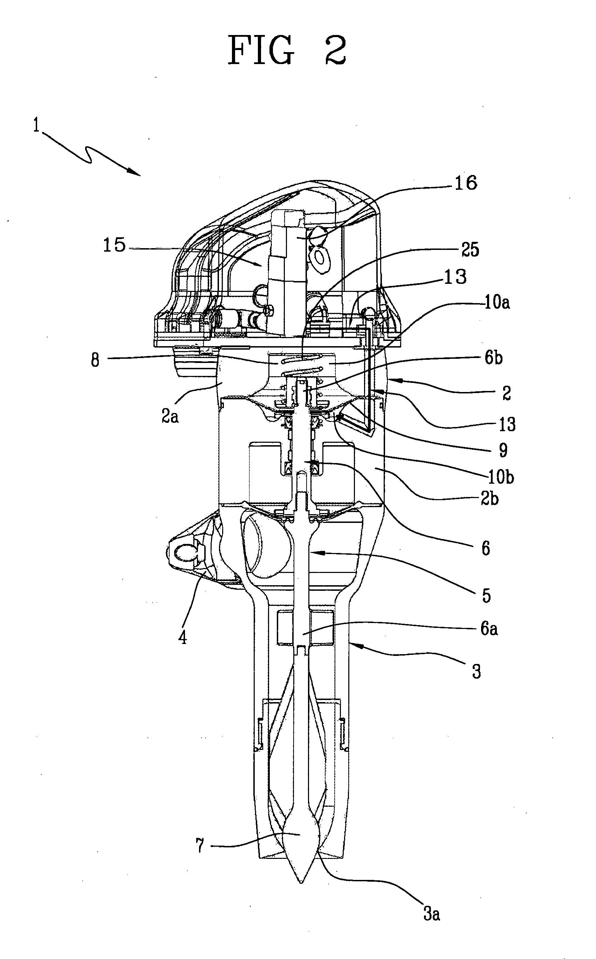

- figure 2 shows a second longitudinal section view of the device illustrated in figure 1;
- figure 3 is a schematic diagram of the dispensing device in figures 1 and 2, illustrated in a first embodiment;
- figure 4 is a schematic diagram of the dispensing device in figures 1 and 2, illustrated in a second embodiment;

Referring to the accompanying drawings, numeral 1 denotes a device, in its entirety, by means of which to dispense a product in a machine for filling containers of whatever type, in accordance with the present invention.

The device, or dispenser 1, comprises a main body denoted 2, and a dispensing nozzle 3 fastened to the main body 2 in such a way that the two parts combine to establish a tap, or valve.

The dispensing device 1 is mounted by way of the main body 2 to a filling device (not illustrated).

The dispensing nozzle 3 is hollow and tubular, aligned coaxially with the main body 2, and presents an outlet 3a from which the product is delivered.

A coupling 4, located on one side of the dispensing nozzle 3, is connected by way of a pipeline (not illustrated) to a tank (not illustrated) filled with the product being batched.

Numeral 5 denotes a valve element housed coaxially and slidably in the dispensing nozzle 3.

More particularly, the valve element 5 comprises a stem 6 connected at a bottom end, denoted 6a, to an ogival element 7, and is movable between a closed configuration of the nozzle, in which the ogival element 7 closes the outlet 3a, and an open configuration in which the ogival element 7 is distanced from the outlet 3a, thereby enabling the release of the product.

The main body 2 comprises two distinct portions 2a and 2b, coupled one to another.

The two portions 2a and 2b present respective concave surfaces offered one to another in such a way as to create a void 8.

Located within the void 8 and interposed between the two portions 2a and 2b is a partition, or diaphragm 9, of which a central portion is secured permanently to the top end 6b of the stem 6 of the valve element 5.

In particular, the partition or diaphragm 9 consists in an elastically deformable element of circular geometry.

The deformation of the diaphragm 9 will thus induce axial movement in the stem 6, consequently causing the dispensing nozzle 3 to open and close.

The void 8 is divided by the deformable diaphragm 9, at the top end 6b of the stem 6, into a first upper chamber 10a and a second lower chamber 10b, both of variable volume.

The action of a compression coil spring 25, located in the first chamber 10a and encircling the stem 6, has the effect of deforming the diaphragm 9 and biasing the valve element 5 toward a 'normally closed' position.

In this situation, the first chamber 10a expands in volume, and the second chamber 10b contracts.

Conversely, when the second chamber 10b expands, the first chamber 10a contracts and the valve element 5 assumes an open position.

The dispenser 1 comprises a first source 11 and a second source 12 of pressurized fluid, such as air, connected respectively by way of pipelines 13 and 14 to the first chamber 10a and to the second chamber 10b. The flows of air are supplied by the first source 11 and the second source 12 at different pressures one from another.

The dispenser 1 further comprises a control component denoted 15, consisting in directional valve means operating on the two pipelines 13 and 14, such as will selectively allow and disallow the passage of air under pressure from the first source 11 and second source 12 to respectively the first chamber 10a and second chamber 10b.

The directional valve means 15 are interlocked to actuator means 15a and operated in such a way that the chambers 10a and 10b can be caused selectively to fill with air and empty of air, thus bringing about the alternation of the valve element 5 between the closed configuration and the open configuration.

In the first configuration, the control component 15 will allow compressed air to flow between the first source 11 and the first chamber 10a, through the relative pipeline 13, while preventing any flow of compressed air between the second source 12 and the second chamber 10b.

This first position of the control component 15 causes the valve element 5 to close, once the container (not illustrated) placed beneath the dispenser 1 has been filled.

In the second configuration, the control component 15 allows compressed air to flow between the second source 12 and the second chamber 10b, through the relative pipeline 14, while preventing any flow of compressed air between the first source 11 and the first chamber 10a.

With the directional valve means 15 in this second position, the valve element 5 is held open so that the container placed beneath the dispensing device 1 can be filled.

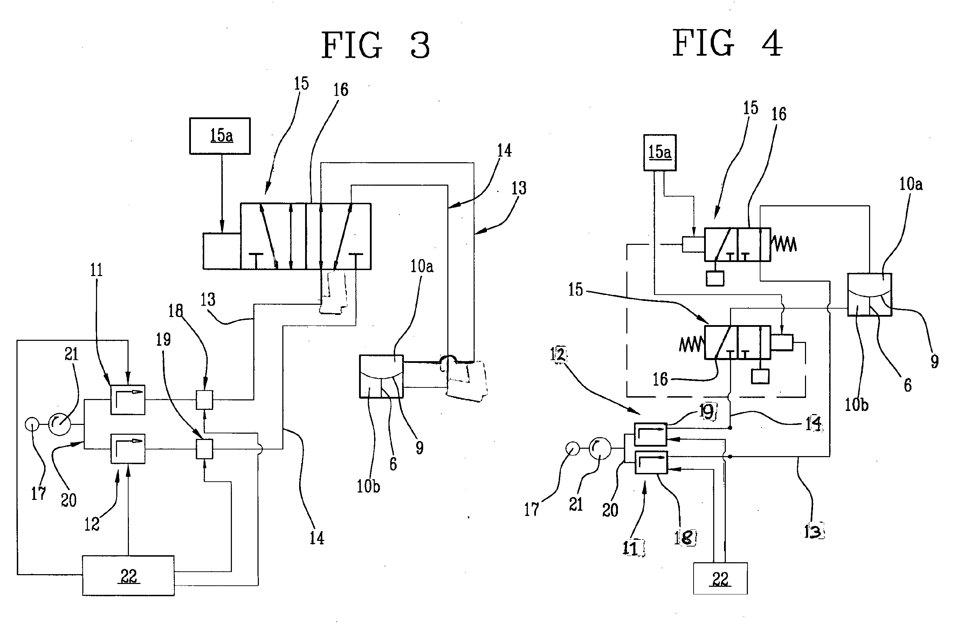

Adopting the embodiment illustrated in figure 3, the directional valve means 15 comprise a single directional control valve 16 operating on both of the two pipelines 13 and 14 at once.

The directional control valve 16 in question would preferably be a five-way two-position type.

Adopting an alternative embodiment as illustrated in figure 4, the directional valve means 15 comprise two distinct directional control valves 16, each operating on one respective pipeline 13 and 14.

In this instance, the directional control valves 16 are both of three-way two-position type.

The first source 11 and the second source 12 supply respective flows of compressed air at different pressures, which can be changed to suit different operating conditions.

The two sources 11 and 12 are connected to a single compressed air generator or compressor 17 and comprise means by which to control the pressure of the air flow, denoted 18 and 19, operating along the respective pipelines 13 and 14 at points upstream of the control component 15 and consisting in valves of conventional type interlocked to a master control unit 22.

Numeral 21 denotes a rotary coupling interposed operatively between the compressor 17 and the aforementioned pressure control means 18 and 19, serving to distribute the flow of air uniformly to each of the dispensing devices installed on the carousel of the filling machine.

The control means 18 and 19 in question take the form of restrictions placed on the respective pipelines 13 and 14, adjustable independently of one another, in such a way that the pressure of the compressed air released by the sources 11 and 12 can be set and regulated with precision through the agency of the master control unit 22.

The master control unit 22 preferably will be a programmable logic controller.

The dispenser 1 according to the present invention is mounted to a filling device dispensing a liquid product in a filling machine.

Such a device (not illustrated) comprises a component by means of which to support at least one container for filling, placed in alignment with the dispenser 1, and feed means supplying the dispenser 1 with the product to be batched into the container.

The stated objects are achieved by the invention, which affords significant advantages.

In effect, given that the two chambers 10a and 10b are connected to respective flows of fluid, of which the pressure can be regulated by way of the master control unit 22, it becomes possible to control the times taken by the valve element 5 to move between the open and closed configurations of the nozzle 3.

The pressure at which the flows of air are supplied is governed by the master control unit 22 on the basis not only of the type of product being handled, but also of the level of the product held in the tank containing the product, and the pressure of the selfsame product.

Consider a situation, for example, where the filling machine has finished batching products of low viscosity into containers and is switched to a new production run, filling containers with a product of high viscosity.

Given that in this instance, for the reasons stated above, the displacement of the valve element 5 from the open position to the closed position needs to be accomplished in a time shorter than that programmed currently by way of in the master control unit 22, the pressure of the air flow through the pipeline 14 serving the upper chamber 10a will be increased, in such a way as to reduce the time taken to close off the outlet 3a when the directional valve means are opened.

Lastly, the master control unit 22 enables extremely quick and simple regulation both of the time taken to switch from the open configuration to the closed configuration, and of the time taken to switch from the closed configuration to the open configuration, for all of the valves installed in a filling machine.

## Claims

1. A device for dispensing a product in a filling machine, comprising:
a main body (2);
a dispensing nozzle (3) fastened to the main body (2) and presenting an outlet (3a) from which the product is delivered;
a valve element (5) housed internally of the dispensing nozzle (3) and movable between configurations of the nozzle in which the outlet (3a) is opened and closed, respectively;
a partition (9), occupying a void (8) within the main body (2) and connected to the valve element (5),
delimiting a first chamber (10a) and a second chamber (10b) of variable volume complementary one to another;
a first source (11) of fluid and a second source (12) of fluid, distinct one from another, connectable selectively by way of respective pipelines (13, 14) to the first chamber (10a) and to the second chamber (10b) in such a way as to displace the valve element (5) between the open configuration and the closed configuration;
**characterized in that**
the fluid is supplied by the first source (11) and by the second source (12) at different pressures, which can be changed to suit different operating conditions.

2. A dispensing device as in claim 1, comprising at least one control component (15) consisting in directional valve means, positioned along the pipelines (13, 14), by which the sources (11, 12) and the respective chambers (10a, 10b) are connected selectively in such a manner that the first chamber (10a) and the second chamber (10b) can be selectively filled with fluid and emptied of fluid.

3. A dispensing device as in claim 2, wherein the control component (15) is switchable between a first position in which pressurized fluid is allowed to flow between the first source (11) and the first chamber (10a) and prevented from flowing between the second source (12) and the second chamber (10b), and a second position in which pressurized fluid is allowed to flow between the second source (12) and the second chamber (10b) and prevented from flowing between the first source (11) and the first chamber (10a).

4. A dispensing device as in claim 2 or 3, wherein the control component (15) comprises at least one directional control valve (16) operating on both pipelines (13, 14) at once, the directional control valve (16) being preferably a five-way two-position valve.

5. A dispensing device as in claim 2 or 3, wherein the control component (15) comprises at least two directional control valves (16) each operating on one respective pipeline (13, 14), the directional control valves (16) being preferably three-way two-position valves.

6. A dispensing device as in any one of the preceding claims, wherein the first source (11) and the second source (12) comprise a single generator (17) of pressurized fluid, and pressure control valve means or restrictions (18, 19) positioned respectively along the two pipelines (13, 14).

7. A dispensing device as in any of claims 2 to 5, and claim 6, wherein the pressure control valve means or restrictions (18, 19) are positioned upstream of the control component (15).

8. A dispensing device as in claim 6 or 7, wherein the pressure control valve means or restrictions (18, 19) are adjustable independently of one another.

9. A dispensing device as in any one of the claims 6 to 8, comprising a master control unit (22) by which the pressure control valve means or restrictions (18, 19) are piloted in such a way as to regulate the outlet pressure values of the fluid.

10. A filling device in a filling machine, **characterized in that** it comprises a dispensing device as in one or more of the preceding claims.

## Patentansprüche

1. Vorrichtung zur Abgabe eines Produkts in einer Füllmaschine, umfassend:
einen Hauptkörper (2);
eine Abgabedüse (3), die am Hauptkörper (2) befestigt ist und einen Austritt (3a) aufweist, aus dem das Produkt geliefert wird;
ein Ventilelement (5), das innerhalb der Abgabedüse (3) untergebracht ist und zwischen Konfigurationen der Düse beweglich ist, in denen der Austritt (3a) geöffnet beziehungsweise geschlossen ist;
eine Trennwand (9), die einen Hohlraum (8) innerhalb des Hauptkörpers (2) einnimmt und mit dem Ventilelement (5) verbunden ist, die eine erste Kammer (10a) und eine zweite Kammer (10b) mit variablem Volumen begrenzt, die komplementär zueinander sind;
eine erste Fluidquelle (11) und eine zweite Fluidquelle (12), die sich voneinander unterscheiden, die wahlweise durch entsprechende Leitungen (13, 14) mit der ersten Kammer (10a) und mit der zweiten Kammer (10b) so verbindbar sind, dass das Ventilelement (5) zwischen der offenen und der geschlossenen Konfiguration verschoben wird;
**dadurch gekennzeichnet, dass**
das Fluid von der ersten Quelle (11) und von der zweiten Quelle (12) bei verschiedenen Drücken bereitgestellt wird, die an unterschiedliche Betriebszustände angepasst werden können.

2. Abgabevorrichtung nach Anspruch 1, umfassend mindestens eine aus Wegeventilmitteln bestehende Regelkomponente (15), die entlang den Leitungen (13, 14) positioniert ist, durch die die Quellen (11, 12) und die entsprechenden Kammern (10a, 10b) wahlweise so verbunden werden, dass die erste Kammer (10a) und die zweite Kammer (10b) wahlweise mit Fluid gefüllt und von Fluid befreit werden können.

3. Abgabevorrichtung nach Anspruch 2, wobei die Regelkomponente (15) zwischen einer ersten Position, in der es einem druckbeaufschlagten Fluid möglich ist, zwischen der ersten Quelle (11) und der ersten Kammer (10a) zu fließen und verhindert wird, dass es zwischen der zweiten Quelle (12) und der zweiten Kammer (10b) fließt, und einer zweiten Position, in der es einem druckbeaufschlagten Fluid möglich ist, zwischen der zweiten Quelle (12) und der zweiten Kammer (10b) zu fließen und verhindert wird, dass es zwischen der ersten Quelle (11) und der ersten Kammer (10a) fließt, umschaltbar ist.

4. Abgabevorrichtung nach Anspruch 2 oder 3, wobei die Regelkomponente (15) mindestens ein Wegeregelventil (16) umfasst, das gleichzeitig an beiden Leitungen (13, 14) betrieben wird, wobei das Wegeregelventil (16) vorzugsweise ein Fünf-Wege-Zwei-Positionen-Ventil ist.

5. Abgabevorrichtung nach Anspruch 2 oder 3, wobei die Regelkomponente (15) mindestens zwei Wegeregelventile (16) umfasst, die jeweils an einer entsprechenden Leitung (13, 14) betrieben werden, wobei die Wegeregelventile (16) vorzugsweise Drei-Wege-Zwei-Positionen-Ventile sind.

6. Abgabevorrichtung nach einem der vorangehenden Ansprüche, wobei die erste Quelle (11) und die zweite Quelle (12) einen einzigen Erzeuger (17) eines druckbeaufschlagten Fluids und Druckregelventilmittel oder Drosselungen (18, 19) umfassen, die jeweils entlang den zwei Leitungen (13, 14) positioniert sind.

7. Abgabevorrichtung nach einem der Ansprüche 2 bis 5 und Anspruch 6, wobei die Druckregelventilmittel oder Drosselungen (18, 19) der Regelkomponente (15) vorgelagert positioniert sind.

8. Abgabevorrichtung nach Anspruch 6 oder 7, wobei die Druckregelventilmittel oder Drosselungen (18, 19) unabhängig voneinander einstellbar sind.

9. Abgabevorrichtung nach einem der Ansprüche 6 bis 8, umfassend eine Hauptregeleinheit (22), durch die die Druckregelventilmittel oder Drosselungen (18, 19) so vorgesteuert werden, dass die Werte des Austrittsdrucks des Fluids reguliert werden.

10. Füllvorrichtung in einer Füllmaschine, **dadurch gekennzeichnet, dass** sie eine Abgabevorrichtung nach einem oder mehreren der vorangehenden Ansprüche umfasst.

## Revendications

1. Dispositif de distribution d'un produit dans une machine de remplissage, comprenant :
un corps principal (2) ;
une buse de distribution (3) fixée au corps principal (2) et présentant une sortie (3a) par laquelle le produit est distribué ;
un élément à vanne (5) logé à l'intérieur de la buse de distribution (3) et pouvant se déplacer entre des configurations de la buse dans laquelle la sortie (3a) est respectivement ouverte et fermée ;
une cloison (9), occupant une cavité (8) à l'intérieur du corps principal (2) et reliée à l'élément de vanne (5), délimitant une première chambre (10a) et une seconde chambre (10b) de volume variable, complémentaire l'une à l'autre ;
une première source (11) de fluide et une seconde source (12) de fluide, distinctes l'une de l'autre,
pouvant être reliées de façon sélective par le biais de conduites respectives (13, 14) à la première chambre (10a) et à la seconde chambre (10b) de manière à déplacer l'élément de vanne (5) entre la configuration d'ouverture et la configuration de fermeture ;
**caractérisé en ce que**
le fluide est envoyé par la première source (11) et par la seconde source (12) à des pressions différentes pouvant être modifiées pour s'adapter à différentes conditions de fonctionnement.

2. Dispositif de distribution selon la revendication 1, comprenant au moins un composant de commande (15) consistant en des moyens de vanne de distribution, placés le long des conduites (13, 14), par lesquelles les sources (11, 12) et les chambres respectives (10a, 10b) sont reliées de façon sélective de manière à ce que la première chambre (10a) et la seconde chambre (10b) peuvent être remplies de fluide et vidées du fluide, de façon sélective.

3. Dispositif de distribution selon la revendication 2, dans lequel le composant de commande (15) peut passer d'une première position dans laquelle le fluide sous pression peut s'écouler entre la première source (11) et la première chambre (10a) en étant empêché de s'écouler entre la seconde source (12) et la seconde chambre (10b), et une seconde position dans laquelle le fluide sous pression peut s'écouler entre la seconde source (12) et la seconde chambre (10b) en étant empêché de s'écouler entre la première source (11) et la première chambre (10a).

4. Dispositif de distribution selon les revendications 2 ou 3, dans lequel le composant de commande (15) comprend au moins un distributeur (16) opérant sur les deux conduites (13, 14) à la fois, le distributeur (16) étant de préférence un distributeur à deux positions et à cinq voies.

5. Dispositif de distribution selon les revendications 2 ou 3, dans lequel le composant de commande (15) comprend au moins deux distributeurs (16) chacun opérant sur une conduite respective (13, 14), les distributeurs (16) étant de préférence des distributeurs à deux positions et à trois voies.

6. Dispositif de distribution selon l'une quelconque des revendications précédentes, dans lequel la première source (11) et la seconde source (12) comprennent un générateur unique (17) de fluide sous pression, et des moyens de vanne de régulation de pression ou étrangleurs (18, 19) placés respectivement le long des deux conduites (13, 14).

7. Dispositif de distribution selon l'une quelconque des revendications de 2 à 5 et selon la revendication 6, dans lequel les moyens de vanne de régulation de pression ou étrangleurs (18, 19) sont placés en amont du composant de commande (15).

8. Dispositif de distribution selon les revendications 6 ou 7, dans lequel les moyens de vanne de régulation de pression ou étrangleurs (18, 19) sont réglables indépendamment les uns des autres.

9. Dispositif de distribution selon l'une quelconque des revendications de 6 à 8, comprenant une unité de commande principale (22) par laquelle les moyens de vanne de régulation de pression ou étrangleurs (18, 19) sont commandés de manière à régler les valeurs de pression de sortie du fluide.

10. Dispositif de remplissage dans une machine de remplissage, **caractérisé en ce qu'**il comprend un dispositif de distribution selon l'une ou plusieurs des revendications précédentes.
